# FASCICULE DE BREVET EUROPEEN

(11) **EP 4 348 415 B1**
(45) Date de publication et mention de la délivrance du brevet: **28.05.2025**
(21) Numéro de dépôt: 22722753.5
(22) Date de dépôt: 13.04.2022
(51) Int. Cl.: G06F 7/58

(54) **PROCEDE DE GENERATION D'UN NOMBRE ALEATOIRE**
VERFAHREN ZUR ERZEUGUNG VON ZUFALLSZAHLEN
METHOD FOR GENERATING RANDOM NUMBERS

(30) Priorité: 28.05.2021 FR 2105603
(43) Date de publication de la demande: 10.04.2024
(73) Titulaire: SPINNION, 78600 Maisons-Laffitte (FR)
(72) Inventeur: SIMON, Peter Roger, 78600 Maisons-Laffitte (FR)
(74) Mandataire: Dupuis-Latour, Dominique
(86) Numéro de dépôt international: PCT/EP2022/059906
(87) Numéro de publication internationale: WO 2022/248117

(56) Documents cités:
- US-A1- 2010 192 014
- US-A1- 2015 055 778
- MARTON KINGA ET AL: "Randomness Assessment of an Unpredictable Random Number Generator based on Hardware Performance Counters", ROMANIAN JOURNAL OF INFORMATION SCIENCE AND TECHNOLOGY, 1 January 2017 (2017-01-01), pages 136 - 160, XP055884913, Retrieved from the Internet <URL:http://www.romjist.ro/full-texts/paper556.pdf> [retrieved on 20220128]

## Description

### Domaine technique de l'invention

L'invention concerne la génération des nombres aléatoires.

De nombreuses techniques nécessitent de disposer de nombres aléatoires, tout particulièrement dans le domaine de la cryptographie lorsqu'il s'agit de mettre en œuvre des algorithmes de chiffrement de haute sécurité tels que AES, RSA, Diffie-Hellman, etc. Mais le recours à des tirages de nombres aléatoires intervient dans bien d'autres domaines, notamment les jeux de hasard, ou encore les techniques de modélisation probabilistes ou la sélection d'échantillons à des fins statistiques.

### État de la technique antérieure

Il existe de multiples manières de générer des nombres aléatoires, avec des niveaux d'entropie variables, l'entropie étant définie comme la mesure du degré effectif d'aléa (absence de caractère déterministe et de prévisibilité au tirage) de la valeur générée.

Dans certains cas, la génération de nombres "pseudo-aléatoires" peut suffire, c'est-à-dire de nombres qui sont obtenus par un procédé qui est déterministe, mais qui produit des valeurs suffisamment indépendantes les unes des autres pour satisfaire les besoins des applications considérées : par exemple les algorithmes de modélisation utilisant des techniques probabilistes, ou les méthodes d'échantillonnage à des fins statistiques.

En revanche, dans le cas notamment du chiffrement des données, il est essentiel que les séries de nombres aléatoires délivrées par le générateur ne présentent aucun lien décelable entre les nombres successifs, c'est-à-dire que les nombres produits soient absolument impossibles à prédire.

Les procédés de génération de nombres aléatoires (et non simplement pseudo-aléatoires) utilisés jusqu'à présent se basent principalement sur des phénomènes physiques, matériels (par exemple un bruit thermique ou électromagnétique) ou sur une interaction non prévisible avec un utilisateur, par exemple les mouvements erratiques d'une souris, qui ne sont ni cycliques ni déterministes.

Ces générateurs délivrent des nombres aléatoires avec une entropie très élevée mais ils présentent l'inconvénient d'être relativement complexes, car ils requièrent une circuiterie matérielle pour le recueil du phénomène physique ou de l'interaction avec l'utilisateur, des circuits convertisseurs analogique/numérique, un module algorithmique de génération de la valeur numérique aléatoire, etc.

De plus, ils sont mal adaptés à la génération de nombres aléatoires de très grande dimension (plusieurs dizaines ou centaines de bits), si ce n'est au prix d'un temps de réponse excessivement long entre la requête d'obtention du nombre aléatoire et la délivrance effective du résultat par le générateur.

L'article de Marton K et al. "Randomness Assessment of an Unpredictable Random Number Generator based on hardware Performance Counters", Romanian Journal of Information Science and Technology, Vol. 20, No. 2, 2017, 136-160, propose une technique de génération de nombres (pseudo-)aléatoires consistant à échantillonner le contenu de l'un (ou de plusieurs) des compteur(s) de performance matérielle d'un processeur et à utiliser le résultat du prélèvement en tant que source de valeur aléatoire non prédictible.

Les compteurs de performance matérielle sont des registres dédiés présents dans les microprocesseurs récents, servant à la surveillance des performances (*performance monitoring*) du processeur en cours de fonctionnement. Ces compteurs comptent des évènements (au sens informatique du terme) en relation avec l'activité du processeur : accès cache réussis ou manqués, progression du pipeline d'instructions, etc. ou encore durées pendant lesquelles une condition donnée reste 'vraie', par comptage du nombre de cycles CPU écoulés jusqu'à ce que cette condition change.

Le caractère hautement imprévisible de l'évolution de ces compteurs, liés à des états multiples et très changeants du fonctionnement du processeur, induit une entropie élevée permettant la génération de séquences de nombre aléatoires. En d'autres termes, le caractère aléatoire du contenu des registres est imputé à l'entropie du système et à la multitude des processus et threads exécutés simultanément.

Cette technique n'est toutefois pas à l'abri de phénomènes tels que : évolutions cycliques des états du processeur, séquences de fonctionnement répétitives, itérations, etc. Pour pallier ce risque, l'article précité de Marton et al. décrit la manière d'opérer une "calibration" du générateur de nombres aléatoires par un *"randomness assessment"* des séquences produites pour divers paramétrages du générateur, permettant de sélectionner les configurations qui procurent la meilleure entropie.

Par conséquent, la mise en œuvre de cette technique impose une calibration du générateur pour assurer que la génération des nombres (pseudo-)aléatoires se fera avec le niveau d'entropie souhaité.

Or les applications les plus récentes de chiffrement de haute sécurité nécessitent la génération très rapide de nombres aléatoires longs et présentant une entropie élevée qui puisse être garantie de façon inconditionnelle, sans analyse préalable ni réglages des paramètres de fonctionnement du générateur.

Le but de l'invention est de remédier à ces difficultés et limitations, en proposant une technique de génération de nombres aléatoires offrant, simultanément :
- une très grande simplicité de réalisation, sans recours à aucune circuiterie matérielle ;
- la possibilité de délivrer à une cadence très élevée des nombres aléatoires aussi longs que souhaité ;
- une entropie maximale des nombres générés, meilleure que ce qui a pu être proposé jusqu'à présent par des techniques telles que celles de Marton et al. ;
- la garantie immédiate d'un fonctionnement optimal avec une entropie maximale, sans aucun recours à une calibration préalable ; et
- la possibilité, dans certaines mises en œuvre, de faire dépendre le fonctionnement propre du générateur aléatoire d'un paramètre de niveau supérieur, lui-même modifié de manière aléatoire à chaque itération du processus, c'est-à-dire avec un double degré d'aléa pour chaque nombre obtenu.

### Exposé de l'invention

Ces buts sont atteints selon l'invention, par un procédé de génération d'un nombre aléatoire mis en œuvre au moyen d'un processeur numérique, comprenant : a) l'interrogation d'un registre interne du processeur, le contenu du registre étant un contenu évolutif se modifiant au cours du temps ; b) l'extraction à un instant donné de *n* bits du registre, *n* ≥ 1 ; c) l'utilisation des *n* bits extraits à l'étape b) en tant que bit(s) constitutif(s) d'un nombre aléatoire de *N* bits à générer ; d) la réitération des étapes a) à c) jusqu'à obtention des *N* bits du nombre aléatoire ; et e) la délivrance du nombre aléatoire à un circuit ou logiciel applicatifs.

De façon caractéristique de l'invention, le procédé comprend en outre, avant l'étape b), une étape de sélection par un processus aléatoire ou pseudo-aléatoire de ceux des *n* bits du registre qui seront extraits à l'étape b), et/ou de sélection par un processus aléatoire ou pseudo-aléatoire de l'un d'entre une pluralité de registres internes potentiellement interrogeables du processeur, et sélection des *n* bits du registre sélectionné, notamment sélection par un processus aléatoire ou pseudo-aléatoire de l'un au moins des bits du registre sélectionné.

Selon diverses formes de mise en œuvre subsidiaires avantageuses :
- au moins un registre interne du processeur comprend un registre interne d'horodatage comptant des impulsions d'une horloge de séquencement du processeur, en particulier un registre de comptage des impulsions directement issues d'un oscillateur de l'horloge ;
- au moins un registre interne du processeur comprend un registre de comptage d'évènements du processeur ;
- les étapes a) à e) sont exécutées au sein d'un micrologiciel du processeur ;
- les *n* bits extraits à l'étape b) sont le(s) bit(s) de poids le plus faible du registre ;
- l'instant donné d'extraction des *n* bits à l'étape b) est un instant déterminé par un processus aléatoire ou pseudo-aléatoire ; et/ou
- l'instant donné d'extraction des *n* bits à l'étape b) est un instant déterminé en réponse à une requête reçue du circuit ou logiciel applicatifs.

### Brève description des dessins

On va maintenant exposer des exemples de mise en œuvre de l'invention, en référence aux dessins annexés où les mêmes références désignent d'une figure à l'autre des éléments identiques ou fonctionnellement semblables.
La Figure 1 illustre de façon schématique un processeur numérique avec les divers blocs auxquels il est interfacé, l'ensemble étant utilisé pour la mise en œuvre du procédé de l'invention.
La Figure 2 explicite la manière de générer un nombre aléatoire par interrogation d'un registre du système de la Figure 1.
La Figure 3 est un organigramme présentant les étapes successives de mise en œuvre du procédé de l'invention.
La Figure 4 est un diagramme décrivant un mode de mise en œuvre perfectionné de l'invention, combinant plusieurs techniques de sélection aléatoire pour l'obtention de la valeur à générer.

### Description détaillée de l'invention

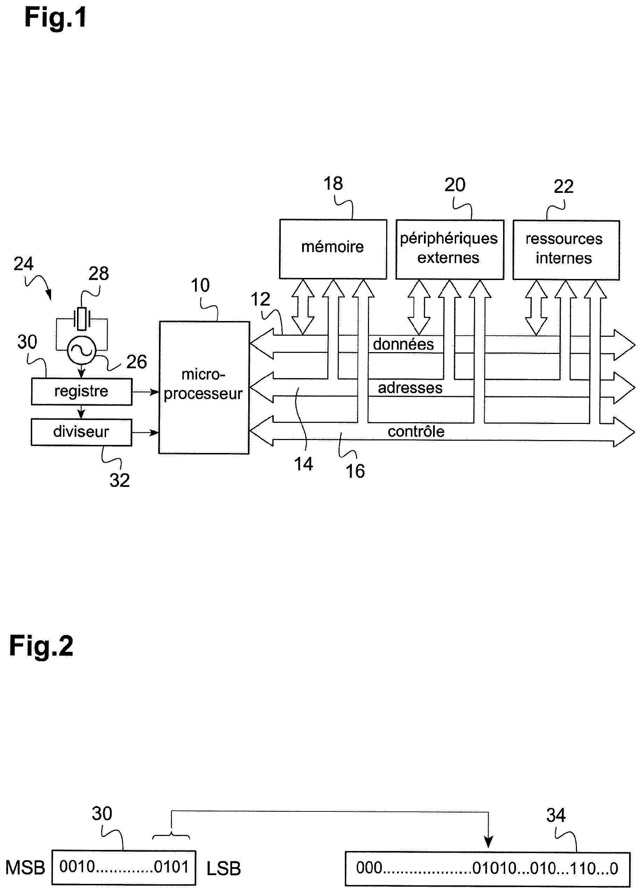

La Figure 1 représente de façon schématique une architecture d'un système à processeur numérique, en elle-même conventionnelle.

Un microprocesseur ou microcalculateur 10 est interfacé par des bus de données 12, d'adresses 14 et de contrôle 16 respectivement à des circuits de mémoire 18, à des périphériques externes 20 et à des ressources internes 22.

Le séquencement général du processeur 10 est assuré par un circuit d'horloge 24 comprenant un oscillateur 26 piloté par un quartz 28. Les périodes de l'oscillateur 26 alimentent un registre d'horodatage 30 comptant les impulsions qui serviront à définir la cadence des cycles CPU successifs du processeur 10 après réduction de la fréquence par un diviseur 32. Le contenu du registre d'horodatage 30 est un contenu évolutif, variant en permanence au rythme des impulsions de l'horloge de séquencement 24.

Le principe de l'invention, schématisé Figure 2, consiste à lire un ou plusieurs bits (*n* bits, avec *n* ≥ 1) d'un registre à évolution rapide du processeur, notamment (mais de façon non limitative) le registre d'horodatage 30, et utiliser ces n bits pour constituer les *N* bits d'un nombre aléatoire 34 de N bits (*N* ≥ *n*)*.*

Si *n < N,* le processus est réitéré jusqu'à complétion des *N* bits du nombre 34.

Il est possible d'extraire, indifféremment, par exemple un bit à la fois (*n* = 1), un demi-octet (*n* = 4), un octet (*n* = 8), etc., pour obtenir les *N* bits du nombre aléatoire 34, sans limitation spécifique sur le nombre *N*, et donc sur la longueur du nombre aléatoire obtenu.

Dans la plupart des microprocesseurs, le registre d'horodatage (*timestamp)* est un registre accessible et interrogeable. Par exemple, dans les processeurs Intel (marque déposée) ce registre d'horodatage est un registre de 64 bits dénommé TSC (*TimeStamp Counter*)*,* et il peut être interrogé par une instruction de bas niveau RDTCP (*Read TSC and Processor ID*)*.* Ce compteur reflète le nombre d'impulsions produites par l'horloge de séquencement depuis la remise à zéro initiale du registre.

Avantageusement, le ou les bits extraits sont les bits de poids le plus faible (LSB) du registre, qui sont des bits dont la valeur est totalement imprévisible à un instant donné compte tenu des fréquences d'horloge très élevées des processeurs actuels, typiquement de plusieurs gigahertz, c'est-à-dire qu'à chaque nanoseconde les derniers bits du registre d'horodatage sont plusieurs fois modifiés.

De plus, l'instant d'exécution de l'instruction d'interrogation du registre est lui-même sujet à un aléa imprévisible, ce qui accroît l'aléa sur la valeur du ou des bits lus lorsque cette interrogation est effectivement effectuée. En effet, l'architecture des microcalculateurs au niveau matériel induit des irrégularités au niveau du séquencement de l'exécution des micro-instructions du fait des interruptions matérielles (événements externes qui déclenchent l'exécution de logiciels spécifiques et qui interrompent l'exécution d'autres logiciels de façon impérative), mais aussi en raison de la coordination nécessaire de plusieurs cœurs qui exécutent des tâches en parallèle.

Au surplus, au-dessus de la couche matérielle s'ajoutent plusieurs couches logicielles qui s'exécutent elles-mêmes avec des niveaux de priorité différents et en compétition permanente avec des événements externes et d'autres logiciels s'exécutant concomitamment.

Il est donc impossible de prédire à quel moment sera effectivement exécutée telle ou telle micro-instruction d'un logiciel applicatif et, par voie de conséquence, de déterminer par anticipation la valeur des bits du registre d'horodatage à ce moment-là, tout particulièrement celle des bits de poids le plus faible, au moment où l'instruction de lecture du registre sera effectivement exécutée.

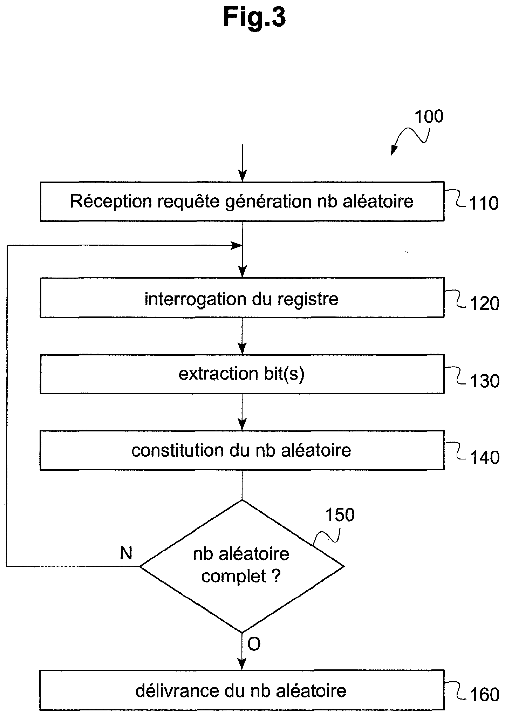

La Figure 3 présente un organigramme 100 illustrant de façon schématique les étapes successives du procédé permettant d'obtenir le nombre aléatoire 34 à la suite de la réception (bloc 110) d'une requête de génération d'un nombre aléatoire :
a) interrogation du registre d'horodatage 30 (bloc 120) ;
b) extraction du ou des n bits du registre (bloc 130) ;
c) utilisation de ce ou ces bits pour constituer le nombre aléatoire (bloc 140) ;
d) si le nombre aléatoire n'est pas complet (test 150), réitération des étapes 120 à 130 ; et enfin
e) délivrance du nombre aléatoire (bloc 160) en tant que réponse à la requête reçue à l'étape 110.

On soulignera que le procédé que l'on vient de décrire présente plusieurs avantages particulièrement significatifs :
- aucun ajout d'élément matériel aux circuits préexistants du processeur numérique, puisque qu'aucune interaction avec l'extérieur (pour utiliser un phénomène physique) ou avec l'utilisateur n'est nécessaire ;
- mise en œuvre simple et universelle, le registre d'horodatage existant sur tous les processeurs numériques ;
- très haut degré d'entropie ; et
- possibilité d'obtenir des nombres aléatoires très longs en un temps très court.

En pratique, le procédé de génération peut être mis en œuvre à plusieurs niveaux :
- entièrement et directement au sein du micrologiciel (*firmware*) du processeur ;
- à partir de ce micrologiciel pour alimenter une couche logicielle applicative de niveau supérieur, donc du processeur vers la couche applicative (ce qui évite les difficultés dues aux protections d'accès au microprocesseur, puisque dans ce cas c'est ce dernier qui génère en interne et délivre le nombre aléatoire) ; ou
- inversement, de la couche applicative vers le processeur, sur requête de l'application. Une application de haut niveau (*User Mode*) n'ayant généralement pas les privilèges pour accéder directement aux registres du processeur, l'implémentation peut être réalisée à deux niveaux avec i) un module s'exécutant à un niveau de privilège élevé pour accéder aux registres du processeur et ii) un second module communiquant avec le premier et interfacé au programme de haut niveau par une API appropriée.

De façon caractéristique de l'invention, le procédé de génération d'un nombre aléatoire exposé ci-dessus prévoit en outre, pour maximiser l'entropie globale du processus, de sélectionner, de façon aléatoire ou pseudo-aléatoire, à chaque itération la position des *n* bits qui seront extraits du ou des registres internes (au lieu de prendre, comme dans l'exemple décrit plus haut, systématiquement les bits de poids le plus faible).

Une variante consiste à faire varier le nombre *n* et/ou l'ordre des bits extraits du registre interrogé, également de façon aléatoire ou pseudo-aléatoire, à chaque étape d'interrogation. En d'autres termes, la valeur *n* est dans ce cas elle-même aléatoire au lieu d'être prédéfinie, de même que l'ordre dans lequel les *n* bits (si plus d'un bit) sont utilisés pour constituer le nombre aléatoire.

Une autre variante consiste, au lieu de simplement copier les *n* bits extraits pour constituer les *N* bits du nombre aléatoire, à utiliser ces *n* bits en les modifiant, par exemple en les inversant ou en les permutant selon un processus aléatoire ou pseudo-aléatoire, en les sommant tous ou en sommant certains d'entre eux, etc.

De façon également caractéristique de l'invention, le procédé de génération d'un nombre aléatoire exposé ci-dessus prévoit, en variante ou en complément, d'utiliser plusieurs des registres internes du processeur pour en extraire des bits, avec un processus de sélection du registre utilisé à chaque extraction qui dépende lui-même d'un processus aléatoire ou pseudo-aléatoire, c'est-à-dire que le registre duquel les *n* bits sont extraits peut changer d'une itération à l'autre, de façon non déterministe.

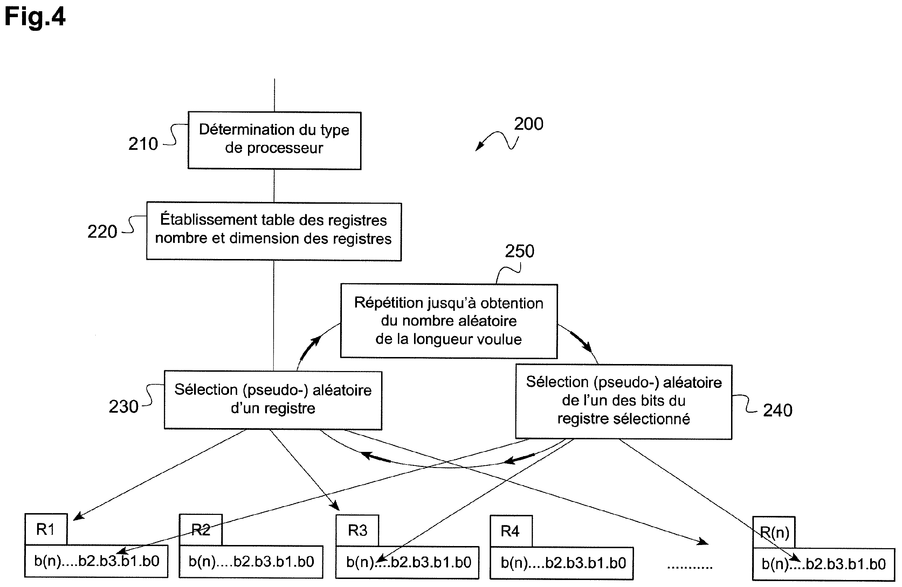

La Figure 4 présente un diagramme 200 décrivant un mode de mise en œuvre universel et perfectionné de cette sixième variante, combinant plusieurs techniques de sélection aléatoire pour l'obtention de la valeur à générer.

La première étape (bloc 210) consiste à déterminer le type de processeur utilisé avec lequel on souhaite générer des nombres aléatoires. Une fois ce processeur reconnu, une table des registres utilisables pour la mise en œuvre du procédé est établie (bloc 220), avec le nombre de registres utilisables à cette fin, et pour chacun son adresse et sa longueur. Ces registres sont illustrés en R1, R2, R3, ... R(n) sur la Figure 4, chacun d'entre eux étant constitué d'une série de bits b0, b1, b2, ... b(n).

Le processus de génération peut alors commencer, avec tout d'abord une première sélection aléatoire ou pseudo-aléatoire de l'un des registres référencés dans la table (bloc 230), puis une deuxième sélection, également aléatoire ou pseudo-aléatoire, de l'un des bits du registre ainsi sélectionné (bloc 240) - ou de plusieurs bits de ce registre, avec les différentes variantes exposées plus haut.

Ces étapes 230 et 240 sont répétées (bloc 250) jusqu'à complétion du nombre aléatoire à générer (bloc 250), qui peut alors être délivré en sortie à l'application requérante.

Une variante, qui peut éventuellement être combinée avec les techniques précédentes, consiste à utiliser plusieurs des registres internes du processeur pour en extraire un ou plusieurs bits, et à appliquer un processus combinatoire, par exemple un XOR, entre les bits extraits des différents registres interrogés.

## Revendications

1. Un procédé de génération d'un nombre aléatoire mis en œuvre au moyen d'un processeur numérique (10), comprenant :
a) l'interrogation (120) d'un registre interne (30) du processeur, le contenu du registre étant un contenu évolutif se modifiant au cours du temps ;
b) l'extraction (130) à un instant donné de *n* bits du registre, *n* ≥ 1 ;
c) l'utilisation (140) des *n* bits extraits à l'étape b) en tant que bit(s) constitutif(s) d'un nombre aléatoire de *N* bits (34) à générer ;
d) la réitération des étapes a) à c) jusqu'à obtention des *N* bits du nombre aléatoire ; et
e) la délivrance (160) du nombre aléatoire à un circuit ou logiciel applicatifs,
**caractérisé en ce que** le procédé comprend en outre, avant l'étape b), une étape de sélection par un processus aléatoire ou pseudo-aléatoire de ceux des *n* bits du registre qui seront extraits à l'étape b), et/ou de sélection par un processus aléatoire ou pseudo-aléatoire de l'un d'entre une pluralité de registres internes potentiellement interrogeables du processeur, et sélection des *n* bits du registre sélectionné, notamment sélection par un processus aléatoire ou pseudo-aléatoire de l'un au moins des bits du registre sélectionné.

2. Le procédé de la revendication 1, dans lequel au moins un registre interne (30) du processeur comprend un registre interne d'horodatage comptant des impulsions d'une horloge (24) de séquencement du processeur.

3. Le procédé de la revendication 2, dans lequel le registre interne d'horodatage est un registre de comptage des impulsions directement issues d'un oscillateur (26) de l'horloge (24).

4. Le procédé de la revendication 1, dans lequel au moins un registre interne (30) du processeur comprend un registre de comptage d'évènements du processeur.

5. Le procédé de la revendication 1, dans lequel les étapes a) à e) sont exécutées au sein d'un micrologiciel du processeur.

6. Le procédé de la revendication 1, dans lequel les *n* bits extraits à l'étape b) sont le(s) bit(s) de poids le plus faible du registre.

7. Le procédé de la revendication 1, dans lequel l'instant donné d'extraction des *n* bits à l'étape b) est un instant déterminé par un processus aléatoire ou pseudo-aléatoire.

8. Le procédé de la revendication 1, dans lequel l'instant donné d'extraction des *n* bits à l'étape b) est un instant déterminé en réponse à une requête reçue du circuit ou logiciel applicatifs.

## Patentansprüche

1. Ein Verfahren zur Erzeugung einer Zufallszahl, das mittels einen digitalen Prozessors (10) durchgeführt wird, umfassend:
a) Abrufen (120) eines internen Registers (30) des Prozessors, wobei der Inhalt des Registers ein evolutiver Inhalt ist, der sich im Laufe der Zeit verändert;
b) Extrahieren (130) eines bestimmten Zeitpunkts aus n Bits des Registers, *n* > 1;
c) Verwenden (140) der in Schritt b) extrahierten *n* Bits als Bit(s), das/die Bestandteil einer Zufallszahl von *N* Bits (34) ist/sind, die erzeugt werden sollen;
d) Wiederholen der Schritte a) bis c) bis zum Erhalt der *N* Bits der Zufallszahl; und
e) Ausgeben (160) der Zufallszahl an eine Anwendungsschaltung oder -software,
**dadurch gekennzeichnet, dass** das Verfahren ferner, vor Schritt b), einen Schritt des Auswählens durch einen Zufallsprozess oder Pseudozufallsprozess derjenigen der *n* Bits des Registers, die in Schritt b) extrahiert werden, und/oder des Auswählens durch einen Zufallsprozess oder Pseudozufallsprozess von einem aus einer Mehrzahl interner Register des Prozessors, die potentiell abrufbar sind, und Auswählen der *n* Bits des ausgewählten Registers, insbesondere Auswählen durch einen Zufallsprozess oder Pseudozufallsprozess des wenigstens einen der Bits des ausgewählten Registers, umfasst.

2. Das Verfahren nach Anspruch 1, wobei wenigstens ein internes Register (30) des Prozessors ein internes Zeitgeberregister umfasst, das Impulse eines Sequenzzeitgebers (24) des Prozessors zählt.

3. Das Verfahren nach Anspruch 2, wobei das interne Zeitgeberregister ein Register zum Zählen der Impulse ist, die unmittelbar von einem Oszillator (126) des Zeitgebers (24) stammen.

4. Das Verfahren nach Anspruch 1, wobei wenigstens ein internes Register (30) des Prozessors ein Register zum Zählen von Ereignissen des Prozessors umfasst.

5. Das Verfahren nach Anspruch 1, wobei die Schritte a) bis e) innerhalb einer Firmware des Prozessors ausgeführt werden.

6. Das Verfahren nach Anspruch 1, wobei die in Schritt b) extrahierten *n* Bits das/die Bit(s) mit dem geringsten Gewicht des Registers sind.

7. Das Verfahren nach Anspruch 1, wobei der bestimmte Zeitpunkt des Extrahierens der *n* Bits in Schritt b) ein Zeitpunkt ist, der durch einen Zufallsprozess oder Pseudozufallsprozess bestimmt wird.

8. Das Verfahren nach Anspruch 1, wobei der bestimmte Zeitpunkt des Extrahierens der *n* Bits in Schritt b) ein Zeitpunkt ist, der in Reaktion auf eine von der Anwendungsschaltung oder -software empfangene Anforderung bestimmt wird.

## Claims

1. A random number generation method implemented by means of a digital processor (10), comprising:
a) searching (120) an internal register (30) of the processor, wherein the content of the register is an evolutive content which changes over time;
b) extracting (130) at a given time *n* bits from the register, *n* ≥ 1;
c) using (140) the *n* bits extracted at step b) as bit(s) for forming a random number of *N* bits (34) to be generated;
d) reiterating steps a) to c) until obtaining the *N* bits of the random number; and
e) providing (160) the random number to an application circuit or software,
**characterized in that** the method further comprises, before step b), a step of selecting, by a random of pseudo-random process, the *n* bits of the register which will be extracted at step b), and/or of selecting, by a random of pseudo-random process, one register among a plurality of internal registers of the processor that may be potentially searched and selecting the *n* bits from the selected register, in particular selecting, by a random or pseudo-random process, at least one of the bits of the selected register.

2. The method of claim 1, wherein at least one internal register (30) of the processor comprises an internal timestamp register which counts pulses of a clock (24) for sequencing the processor.

3. The method of claim 2, wherein the internal timestamp register is a register which counts pulses directly outputted from an oscillator (26) of the clock (24).

4. The method of claim 1, wherein at least one internal register (30) of the processor comprises a register which counts processor events.

5. The method of claim 1, wherein steps a) to e) are carried out within a firmware of the processor.

6. The method of claim 1, wherein the *n* bits extracted at step b) are the least significant bit(s) of the register.

7. The method of claim 1, wherein the given time of extraction of the *n* bits at step b) is a time which is determined by a random or pseudo-random process.

8. The method of claim 1, wherein the given time of extraction of the *n* bits at step b) is a time determined in response to a request received from the application circuit or software.
